# EUROPEAN PATENT APPLICATION

(11) **EP 3 489 203 A1**
(43) Date of publication of application: **29.05.2019**
(21) Application number: 17830241.0
(22) Date of filing: 14.04.2017
(51) Int. Cl.: C03C 17/30

(54) **GLASS CONTAINER SILICA-GEL COATING PRODUCTION PROCESS AND METHOD**

(30) Priority: 22.07.2016 CN 201610591220
(71) Applicant: Shenzhen Bangjia Industrial Co., Ltd., Shenzhen, Guangdong 518000 (CN)
(72) Inventor: MING, Anguo, Shenzhen Guangdong 518000 (CN)
(74) Representative: Cabinet Chaillot
(86) International application number: PCT/CN2017/080522
(87) International publication number: WO 2018/014603

(57) **Abstract**

The present invention provides a process for preparing a silicone rubber coating for a glass container, which comprises the following steps: preparing a glass container and performing a cleaning treatment to an outer surface of the glass container; spraying an adhesive layer onto the outer surface of the glass container and spraying a liquid silicone rubber layer onto an outer surface of the adhesive layer, or directly spraying a self-adhesive liquid silicone rubber layer onto the outer surface of the glass container, wherein the liquid silicone rubber is colored or colorless liquid silicone rubber and an viscosity of the self-adhesive liquid silicone rubber layer is 1000-2000cst. The present invention has the following beneficial effects: the process is simple so that the liquid silicone rubber can be sprayed onto the surface of the glass container without specially treating the substrate surface; a color of the silicone rubber layer on the surface of the glass container may have an obvious change from light to dark or vice versa; the silicone rubber layer on the outer surface of the silicone rubber on the glass container surface has an entirely even thickness and a very attractive appearance; a silicone rubber matte oil layer is further added onto the outer surface of the vulcanized silicone rubber so that the hand feeling is comfortable and the texture is rich; and a preset function of the product is enhanced and a color of the product is enriched.

## Description

### Field of the Invention

The present invention relates to a process for a silicone rubber coating for a glass container, in particular to a process for preparing a silicone rubber coating for a glass container.

### Background of the Invention

An adhesive force of commercially available, self-adhesive molded liquid silicone rubber to substrates (such as glass, metal and plastic or the like) is poor. If a strong adhesive force is needed, a substrate surface needs to be treated, which causes a cumbersome process. Further, a silicone rubber layer sprayed after a complex treatment is performed to the substrate surface is colorless or only has a single color without changes in color depths, and has an unaesthetic appearance, a poor hand feeling and a lacking texture.

### Summary of the Invention

The purpose of the present invention is to provide a process for preparing a novel silicone rubber coating for a glass container, which aims at overcoming the following defects: the commercially available, self-adhesive molded liquid silicone rubber has a poor adhesive force to substrates (such as glass, metal and plastic or the like); if a strong adhesive force is needed, a substrate surface needs to be treated, which causes a cumbersome process; a silicone rubber layer sprayed after a complex treatment is performed to the substrate surface is colorless or only has a single color without changes in color depths; and the silicone rubber layer has an unaesthetic appearance, a poor hand feeling and a lacking texture.

The present invention is implemented by the following technical solution: a process for preparing a silicone rubber coating for a glass container, wherein a liquid silicone rubber layer is sprayed onto an outer surface of the glass container, so that by an adhesive force of the liquid silicone rubber, glass is protected and when the glass is broken, glass fragments are prevented from scattering around; and the process comprises the following steps:
(1) preparing a glass container and performing a cleaning treatment to an outer surface of the glass container;
(2) spraying an adhesive layer onto the outer surface of the glass container and spraying a liquid silicone rubber layer onto an outer surface of the adhesive layer, or directly spraying a self-adhesive liquid silicone rubber layer onto the outer surface of the glass container, wherein the liquid silicone rubber is colored or colorless liquid silicone rubber and an viscosity of the self-adhesive liquid silicone rubber layer is 1000-2000cst; and
(3) drying for 30-100min at a temperature of 180-220°C to vulcanize the silicone rubber.

Further, in the step (2), a colored liquid silicone rubber layer is diluted with organic solvent, sprayed, from thick to thin or vice versa, onto the outer surface of the adhesive layer from one end to the other end of the glass container, and standing is performed for a period of time, or colored self-adhesive liquid silicone rubber is diluted with organic solvent, sprayed, from thick to thin or vice versa, onto the outer surface of the glass container from one end to the other end of the glass container, and standing is performed for a period of time.

Further, in the step (2), the colored liquid silicone rubber layer is diluted with organic solvent, sprayed, from thick to thin or vice versa, onto the outer surface of the adhesive layer from one end to the other end of the glass container, and standing is performed for a period of time, or the colored self-adhesive liquid silicone rubber is diluted with organic solvent, sprayed, from thick to thin or vice versa, onto the outer surface of the glass container from one end to the other end of the glass container, and after standing for a period of time, a colorless liquid silicone rubber layer is sprayed, from thick to thin or vice versa, onto an outer layer of the colored liquid silicone rubber layer from one end to the other end of the glass container by using another machine.

Further, after the step (3), a silicon rubber matte oil layer is further added onto the outer surface of the vulcanized silicone rubber; in order to enhance the hand feeling of the silicone rubber layer and remove static electricity from the silicone rubber, silicone rubber matte oil is added into silicone oil and baked at 150-180°C to vulcanize a surface layer under a catalytic effect of platinum; in order to enhance a preset function of the product and enrich the color of the product, a temperature-sensitive or non-temperature-sensitive toner additive is added into the liquid silicone rubber, and dispersed by high-speed stirring to mix it with the liquid silicone rubber, such that the liquid silicone rubber changes its color or not with changes in temperature, wherein the silicone rubber matte oil is micronized polyethylene wax and its mixing proportion in the silicon oil generally does not exceed 10%.

Further, in the step (2), the adhesive layer is sprayed onto the outer surface of the glass container and comprises the following components in percentage by mass:
65% of polysiloxane;
15% of fumed white carbon black SiO₂; and
20% of methyl silicone resin.

Further, in the step (2), the adhesive layer is sprayed onto the outer surface of the glass container, wherein a spraying time is 1-5sec and a thickness is in a range from 1 to 10µm.

Further, in the step (2), the colored liquid silicone rubber layer is diluted with organic solvent, sprayed, from thick to thin or vice versa, onto the outer surface of the adhesive layer from one end to the other end of the glass container, and standing is performed for a period of time, or the colored self-adhesive liquid silicone rubber is diluted with organic solvent, sprayed, from thick to thin or vice versa, onto the outer surface of the glass container from one end to the other end of the glass container, and standing is performed for a period of time, wherein a spraying time is 5-10sec; a standing time is 5-10sec; and a thickness is in a range from 20 to 2000µm.

Further, a colorless liquid silicone rubber layer is sprayed, from thin to thick or vice versa, onto an outer layer of the colored liquid silicone rubber layer from one end to the other end of the glass container by using another machine, wherein a spraying time is 5-10sec; and a thickness is in a range from 20 to 2000µm.

Further, a process for preparing the self-adhesive liquid silicone rubber comprises the following steps:
(1) preparing fumed white carbon black SiO₂ and mixing it with a siloxane treating agent having polar groups, wherein the polar groups are epoxy groups and methyl acrylic acid propyl groups;
(2) mixing the treated fumed white carbon black SiO₂ with silane or silicone oil having polar groups;
(3) dividing the mixed material into Group A and Group B, wherein Group A contains a platinum vulcanizing agent, Group B contains an inhibitor and the inhibitor usually is an alkynol substance such as methylbutynol; and
(4) mixing Group A with Group B in a ratio of 1:1 and diluting the liquid silicone rubber with organic solvent, wherein a viscosity is 1000-2000cst.

Further, the self-adhesive liquid silicone rubber mainly comprises the following components in percentage by mass:
20-40% of fumed white carbon black SiO₂;
60-75% of vinyl silicone oil with a molecular structural formula of:

   CH2=CH-Si(CH3)2O[(CH3)2SiO]n(CH3)2Si-CH=CH2;

   and
2-10% of hydrogen-containing silicone oil with a molecular structural formula of: C₃H₉OSi·(CH₄OSi)n·C₃H₉Si,
such that a viscosity and a tensile strength of the silicone rubber is 500 (Pas, 23°C) and is greater than 9Mpa, respectively.

The present invention has the following beneficial effects:
(1) the process is simple so that the liquid silicone rubber can be sprayed onto the surface of the glass container without specially treating the substrate surface;
(2) a color of the silicone rubber layer on the surface of the glass container may have an obvious change from light to dark or vice versa;
(3) the silicone rubber layer on the outer surface of the silicone rubber on the glass container surface has an entirely even thickness and a very attractive appearance;
(4) the silicone rubber matte oil layer is further added onto the outer surface of the vulcanized silicone rubber; in order to enhance the hand feeling of the silicone rubber layer and remove static electricity from the silicone rubber, silicone rubber matte oil is added into silicone oil and baked at 150-180°C to vulcanize a surface layer under a catalytic effect of platinum; and the hand feeling is comfortable and the texture is rich; and
(5) in order to enhance a preset function of the product and enrich the color of the product, a temperature-sensitive or non-temperature-sensitive toner additive is added into the liquid silicone rubber, and dispersed by a high-speed stirring to mix it with the liquid silicone rubber, such that the liquid silicone rubber changes its color or not with changes in temperature.

### Description of the Drawings

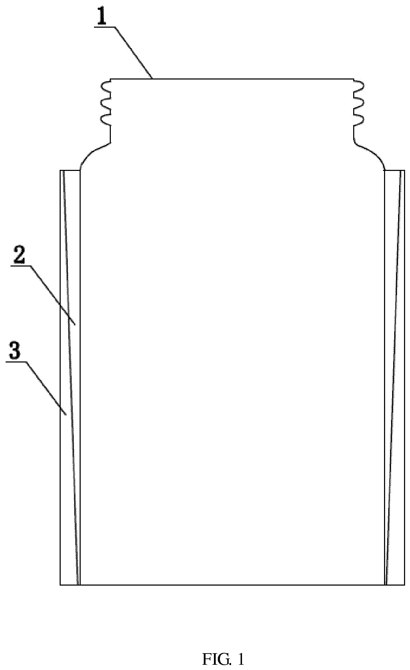

FIG. 1 is a structural schematic view of a liquid silicone rubber layer sprayed onto an outer surface of a glass container according to the present invention.

Reference signs: 1-glass container; 2-colored liquid silicone rubber layer from thick to thin or vice versa; 3-colorless liquid silicone rubber layer from thin to thick or vice versa.

### Detailed Description of the Invention

The present invention will be further described below with reference to the drawings in combination with the detailed description.

As illustrated in FIG. 1, in a process for preparing a silicone rubber coating for a glass container, a liquid silicone rubber layer is sprayed onto an outer surface of a glass container 1, so that by an adhesive force from the liquid silicone rubber, glass is protected and when the glass is broken, glass fragments are prevented from scattering around. The process comprises the following steps:
(1) preparing the glass container 1 and performing a cleaning treatment to the outer surface of the glass container;
(2) spraying an adhesive layer onto the outer surface of the glass container 1 and spraying a liquid silicone rubber layer onto an outer surface of the adhesive layer, or directly spraying a self-adhesive liquid silicone rubber layer onto the outer surface of the glass container, wherein the liquid silicone rubber is colored or colorless liquid silicone rubber and an viscosity of the self-adhesive liquid silicone rubber layer is 1000-2000cst; and
(3) drying for 30-100min at a temperature of 180-220°C to vulcanize the silicone rubber.

Further, in the step (2), a colored liquid silicone rubber layer 2 is diluted with organic solvent, sprayed, from thick to thin or vice versa, onto the outer surface of the adhesive layer from one end to the other end of the glass container 1, and standing is performed for a period of time, or colored self-adhesive liquid silicone rubber is diluted with organic solvent, sprayed, from thick to thin or vice versa, onto the outer surface of the glass container 1 from one end to the other end of the glass container 1, and standing is performed for a period of time.

Further, in the step (2), the colored liquid silicone rubber layer 2 is diluted with organic solvent, sprayed, from thick to thin or vice versa, onto the outer surface of the adhesive layer from one end to the other end of the glass container 1, and standing is performed for a period of time, or the colored self-adhesive liquid silicone rubber is diluted with organic solvent, sprayed, from thick to thin or vice versa, onto the outer surface of the glass container 1 from one end to the other end of the glass container 1, and after standing for a period of time, a colorless liquid silicone rubber layer 3 is sprayed, from thick to thin or vice versa, onto an outer layer of the colored liquid silicone rubber layer 2 from one end to the other end of the glass container 1 by using another machine.

Further, after the step (3), a silicon rubber matte oil layer is further added onto the outer surface of the vulcanized silicone rubber; in order to enhance the hand feeling of the silicone rubber layer and remove static electricity from the silicone rubber, silicone rubber matte oil is added into silicone oil and baked at 150-180°C to vulcanize a surface layer under a catalytic effect of platinum; in order to enhance a preset function of the product and enrich the color of the product, a temperature-sensitive or non-temperature-sensitive toner additive is added into the liquid silicone rubber, and dispersed by high-speed stirring to mix it with the liquid silicone rubber, such that the liquid silicone rubber changes its color or not with changes in temperature; wherein the silicone rubber matte oil is micronized polyethylene wax and its mixing proportion in the silicon oil generally does not exceed 10%.

Further, in the step (2), the adhesive layer is sprayed onto the outer surface of the glass container 1 and the adhesive layer comprises the following components in percentage by mass:
65% of polysiloxane;
15% of fumed white carbon black SiO₂; and
20% of methyl silicone resin.

Further, in the step (2), the adhesive layer is sprayed onto the outer surface of the glass container 1, wherein a spraying time is 1-5sec and a thickness is in a range from 1 to 10µm.

Further, in the step (2), the colored liquid silicone rubber layer 2 is diluted with organic solvent, sprayed, from thick to thin or vice versa, onto the outer surface of the adhesive layer from one end to the other end of the glass container 1, and standing is performed for a period of time, or the colored self-adhesive liquid silicone rubber is diluted with organic solvent, sprayed, from thick to thin or vice versa, onto the outer surface of the glass container 1 from one end to the other end of the glass container 1, and standing is performed for a period; wherein a spraying time is 5-10sec; a standing time is 5-10sec; and a thickness is in a range from 20 to 2000µm.

Further, a colorless liquid silicone rubber layer 3 is sprayed, from thick to thin or vice versa, onto an outer layer of the colored liquid silicone rubber layer 2 from one end to the other end of the glass container 1 by using another machine, wherein a spraying time is 5-10sec; and a thickness is in a range from 20 to 2000µm.

Further, a process for preparing the self-adhesive liquid silicone rubber comprises the following steps:
(1) preparing fumed white carbon black SiO₂ and mixing it with a siloxane treating agent having polar groups, wherein the polar groups are epoxy groups and methyl acrylic acid propyl groups;
(2) mixing the treated fumed white carbon black SiO₂ with silane or silicone oil having polar groups;
(3) dividing the mixed material into Group A and Group B, wherein Group A contains a platinum vulcanizing agent, Group B contains an inhibitor and the inhibitor usually is an alkynol substance such as methylbutynol; and
(4) mixing Group A with Group B in a ratio of 1:1 and diluting the liquid silicone rubber with organic solvent, wherein a viscosity is 1000-2000cst.

Further, the self-adhesive liquid silicone rubber mainly comprises the following components in percentage by mass:
20-40% of fumed white carbon black SiO₂;
60-75% of vinyl silicone oil with a molecular structural formula of:

   CH2=CH-Si(CH3)2O[(CH3)2SiO]n(CH3)2Si-CH=CH2;

   and
2-10% of hydrogen-containing silicone oil with a molecular structural formula of: C₃H₉OSi·(CH₄OSi)n·C₃H₉Si,
such that the viscosity and the tensile strength of the silicone rubber is 500 (Pas, 23°C) and is greater than 9Mpa, respectively.

According to the disclosure and teaching of the above-mentioned description, one skilled in the art may make proper variations and modifications to the above-mentioned implementation modes. Therefore, the present invention is not limited to the implementation modes disclosed and described above, and some modifications and variations made to the present invention shall also be included in the protection scope of the claims of the present invention. Besides, although some specific terms are used in the description, these terms are just used for facilitating the description instead of limiting the present invention.

## Claims

1. A process for preparing a silicone rubber coating for a glass container, wherein a liquid silicone rubber layer is sprayed onto an outer surface of the glass container, and glass is protected by an adhesive force from the liquid silicone rubber, when the glass is broken, glass fragments are prevented from scattering around; which comprises the following steps:
(1) preparing a glass container and performing a cleaning treatment to an outer surface of the glass container;
(2) spraying an adhesive layer onto the outer surface of the glass container and spraying a liquid silicone rubber layer onto an outer surface of the adhesive layer, or directly spraying a self-adhesive liquid silicone rubber layer onto the outer surface of the glass container, wherein the liquid silicone rubber is colored or colorless liquid silicone rubber and an viscosity of the self-adhesive liquid silicone rubber layer is 1000-2000cst; and
(3) drying for 30-100min at a temperature of 180-220°C to vulcanize the silicone rubber.

2. The process for preparing a silicone rubber coating for a glass container according to claim 1, wherein in the step (2), a colored liquid silicone rubber layer is diluted with organic solvent, sprayed, from thick to thin or vice versa, onto the outer surface of the adhesive layer from one end to the other end of the glass container, and standing is performed for a period of time, or colored self-adhesive liquid silicone rubber is diluted with organic solvent, sprayed, from thick to thin or vice versa, onto the outer surface of the glass container from one end to the other end of the glass container, and standing is performed for a period of time.

3. The process for preparing a silicone rubber coating for a glass container according to claim 2, wherein in the step (2), the colored liquid silicone rubber layer is diluted with organic solvent, sprayed, from thick to thin or vice versa, onto the outer surface of the adhesive layer from one end to the other end of the glass container, and standing is performed for a period of time, or the colored self-adhesive liquid silicone rubber is diluted with organic solvent, sprayed, from thick to thin or vice versa, onto the outer surface of the glass container from one end to the other end of the glass container, and after standing for a period of time, a colorless liquid silicone rubber layer is sprayed, from thin to thick or vice versa, onto an outer layer of the colored liquid silicone rubber layer from one end to the other end of the glass container by using another machine.

4. The process for preparing a silicone rubber coating for a glass container according to claim 1, wherein after the step (3), a silicon rubber matte oil layer is further added onto an outer surface of the vulcanized silicone rubber; in order to enhance the hand feeling of the silicone rubber layer and remove static electricity from the silicone rubber, silicone rubber matte oil is added into silicone oil and baked at 150-180°C to vulcanize a surface layer under a catalytic effect of platinum; in order to enhance a preset function of the product and enrich a color of the product, a temperature-sensitive or non-temperature-sensitive toner additive is added into the liquid silicone rubber, and dispersed by high-speed stirring to mix it with the liquid silicone rubber, such that the liquid silicone rubber changes its color or not with changes in temperature, wherein the silicone rubber matte oil is micronized polyethylene wax and its mixing proportion in the silicon oil generally does not exceed 10%.

5. The process for preparing a silicone rubber coating for a glass container according to claim 1, wherein in the step (2), the adhesive layer is sprayed onto the outer surface of the glass container, the adhesive layer comprising the following components in percentage by mass:
65% of polysiloxane;
15% of fumed white carbon black SiO₂; and
20% of methyl silicone resin.

6. The process for preparing a silicone rubber coating for a glass container according to claim 1, wherein in the step (2), the adhesive layer is sprayed onto the outer surface of the glass container, wherein a spraying time is 1-5sec and a thickness is in a range from 1 to 10µm.

7. The process for preparing a silicone rubber coating for a glass container according to claim 2, wherein in the step (2), the colored liquid silicone rubber layer is diluted with organic solvent, sprayed, from thick to thin or vice versa, onto the outer surface of the adhesive layer from one end to the other end of the glass container, and standing is performed for a period of time, or the colored self-adhesive liquid silicone rubber is diluted with organic solvent, directly sprayed, from thick to thin or vice versa, onto the outer surface of the glass container from one end to the other end of the glass container, and standing is performed for a period of time; wherein a spraying time is 5-10sec; a standing time is 5-10sec; and a thickness is in a range from 20 to 2000µm.

8. The process for preparing a silicone rubber coating for a glass container according to claim 2, wherein the colorless liquid silicone rubber layer is sprayed, from thin to thick or vice versa, onto the outer layer of the colored liquid silicone rubber layer from one end to the other end of the glass container by another machine, wherein a spraying time is 5-10sec; and a thickness is in a range from 20 to 2000µm.

9. The process for preparing a silicone rubber coating for a glass container according to claim 1, wherein a process for preparing the self-adhesive liquid silicone rubber comprises the following steps:
(1) preparing fumed white carbon black SiO₂ and mixing it with a siloxane treating agent having polar groups, wherein the polar groups are epoxy groups and methyl acrylic acid propyl groups;
(2) mixing the treated fumed white carbon black SiO₂ with silane or silicone oil having polar groups;
(3) dividing the mixed material into Group A and Group B, wherein Group A contains a platinum vulcanizing agent, Group B contains an inhibitor, and the inhibitor usually is an alkynol substance such as methylbutynol; and
(4) mixing Group A with Group B in a ratio of 1:1 and diluting the liquid silicone rubber with organic solvent, wherein a viscosity is 1000-2000cst.

10. The process for preparing a silicone rubber coating for a glass container according to claim 1 or 9, wherein the self-adhesive liquid silicone rubber mainly comprises the following components in percentage by mass:
20-40% of fumed white carbon black SiO₂;
60-75% of vinyl silicone oil with a molecular structural formula of:
CH2=CH-Si(CH3)2O[(CH3)2SiO]n(CH3)2Si-CH=CH2;
and
2-10% of hydrogen-containing silicone oil with a molecular structural formula of:
C₃H₉OSi·(CH₄OSi)n·C₃H₉Si,
such that a viscosity and a tensile strength of the silicone rubber is 500 (Pas, 23°C) and is greater than 9Mpa, respectively.
